# EUROPEAN PATENT APPLICATION

(11) **EP 4 224 706 A1**
(43) Date of publication of application: **09.08.2023**
(21) Application number: 22207938.6
(22) Date of filing: 17.11.2022
(51) Int. Cl.: H02P 27/12, H02M 7/5387

(54) **MOTOR DRIVING APPARATUS**

(30) Priority: 07.02.2022 KR 20220015596
(71) Applicant: HYUNDAI MOTOR COMPANY, Seoul 06797 (KR); Kia Corporation, Seocho-gu Seoul 06797 (KR)
(72) Inventor: JEONG, Kang Ho, 18280 Hwaseong-si (KR); KIM, Myung Ho, 18280 Hwaseong-si (KR); SHIN, Sang Cheol, 18280 Hwaseong-si (KR); LIM, Young Seul, 18280 Hwaseong-si (KR)
(74) Representative: Isarpatent

(57) **Abstract**

A motor driving apparatus for driving a motor (100) having a plurality of winding portions (C1-1-C3-2) respectively corresponding to a plurality of phases is directed for improving an inverter (10, 20) efficiency in driving the motor while varying the inductance of the motor by providing various motor driving modes to meet the required performance of the motor.

## Description

### BACKGROUND OF THE PRESENT DISCLOSURE

### Field of the present disclosure

The present disclosure relates to a motor driving apparatus, and to a motor driving apparatus configured to switch a motor driving mode to a closed winding mode or to an open end winding mode according to the required output of the motor and vary the inductance of the motor windings to allow an efficient motor driving.

### Description of Related art

In general, windings of respective phases included in a motor are electrically connected to an inverter at one end and electrically connected to each other at the other end to form a Y-connection.

When the motor is driven, the switching elements in the inverter are turned on or off by a pulse width modulation control, and an alternating current is generated by applying a line voltage to the windings of the Y-connected motor to generate torque.

Since the fuel efficiency (or electrical efficiency) of eco-friendly vehicles such as electric vehicles that use the torque generated by the motor as power is determined by the power conversion efficiency of the inverter-motor, it is important to maximize the power conversion efficiency of the inverter and the efficiency of the motor in order to improve the fuel efficiency.

The efficiency of the inverter-motor system is mainly determined by the voltage utilization rate of the inverter. The fuel efficiency may be improved when the operating point of the vehicle as determined by the relationship between the motor speed and the torque is formed in a section with a high voltage utilization rate.

However, since an increase in the number of windings of the motor to increase the maximum torque of the motor moves the section with a high voltage utilization rate away from a low torque region which is the main operating point of the vehicle, a problem of deteriorating fuel efficiency may arise. Furthermore, from the viewpoint of fuel efficiency, when the main operating point is designed to be in a section with a high voltage utilization rate, a problem of deteriorating acceleration start performance of the vehicle caused by the limited maximum torque of the motor may arise.

Technology for driving one motor using two inverters and a mode changeover switch is recently introduced in the art to meet the demand for a motor driving technology for improving the efficiency of a system while covering both low-output and high-output sections with one motor.

The information included in this Background of the present disclosure is only for enhancement of understanding of the general background of the present disclosure and may not be taken as an acknowledgement or any form of suggestion that this information forms the prior art already known to a person skilled in the art.

### BRIEF SUMMARY

Various aspects of the present disclosure are directed to providing a motor driving apparatus of improving inverter efficiency in driving the motor while varying the inductance of the motor by providing various motor driving modes to meet the required performance of the motor.

Technical objects to be achieved by the present disclosure are not limited to the technical objects described above, and other technical objects not described will be clearly understood by those skilled in the art to which the present disclosure pertains.

According to an exemplary embodiment of the present disclosure for addressing the technical object described above, the motor driving apparatus of driving the motor having a plurality of winding portions respectively corresponding to a plurality of phases may include a first inverter including a plurality of first switching elements and electrically connected to a first end of each of the winding portions, a second inverter including a plurality of second switching elements and electrically connected to a second end of each of the winding portions, a first changeover switch portion having a plurality of third switching elements, a first end of each of the third switching elements being electrically connected to a connecting portion between a first coil and a second coil provided in each of the winding portions and electrically connected to each other in series and second ends of the plurality of third switching elements being electrically connected to each other, a second changeover switch portion having a plurality of fourth switching elements, a first end of each of the fourth switching elements being electrically connected to the second end of each of the winding portions and second ends of the plurality of fourth switching elements being electrically connected to each other, and a controller configured for controlling ON/OFF states of the first switching elements to fourth switching elements based on at least one of the required output, required torque, or speed of the motor.

For example, when the required torque is equal to or less than a preset torque reference and the required output is greater than a preset power reference, the controller may turn on the plurality of third switching elements, turn off the plurality of fourth switching elements and the second inverter, and control the plurality of first switching elements through pulse width modulation to drive the motor.

For example, when the plurality of third switching elements are turned on and the plurality of fourth switching elements and the second inverter are turned off, the motor may be driven as a closed end portion winding motor having a neutral by the other ends of the plurality of third switching elements.

For example, when the required torque is greater than a preset torque reference, the required output is equal to or less than a preset power reference, and the speed is equal to or less than a preset speed reference, the controller may turn on the plurality of fourth switching elements, turn off the plurality of third switching elements and the second inverter, and control the plurality of first switching elements through pulse width modulation to drive the motor.

For example, when the plurality of fourth switching elements are turned on and the plurality of third switching elements and the second inverter are turned off, the first coil and the second coil in each of the winding portions may be electrically connected to each other in series, and the motor may be driven as a closed end winding motor having a neutral by the other ends of the plurality of fourth switching elements.

For example, when the required torque is greater than a preset torque reference, the required output is greater than a preset power reference, and the speed is greater than a preset speed reference, the controller may turn off the plurality of third switching elements and the plurality of fourth switching element and control the plurality of first switching elements and the plurality of second switching elements through pulse width manipulation to drive the motor as an open end winding motor.

Furthermore, according to another exemplary embodiment of the present disclosure, the motor driving apparatus of driving the motor having a plurality of winding portions respectively corresponding a plurality of phases may include a first inverter including a plurality of first switching elements and electrically connected to a first end of each of the winding portions, a second inverter including a plurality of second switching elements and electrically connected to a second end of each of the winding portions, a plurality of first changeover switch portions respectively having a plurality of third switching elements, one end of each of the switching elements being electrically connected to a connecting portion between a pair of coils adjacent to but different from each other among a plurality of coils provided in each of the winding portions and electrically connected to each other in series and the other ends of the plurality of switching elements being electrically connected to each other, a second changeover switch portion having a plurality of fourth switching elements, a first end of each of the fourth switching elements being electrically connected to the second end of each of the winding portions and second ends of the plurality of fourth switching elements being electrically connected to each other, and a controller configured for controlling ON/OFF states of the first switching elements, the second switching elements, the third switching elements, and the fourth switching elements based on at least one of the required output, required torque, speed of the motor.

For example, the controller may turn off the plurality of third switching elements and the plurality of fourth switching elements and control the plurality of first switching elements and the plurality of second switching elements through pulse width modulation to drive the motor as an open end winding motor.

For example, the controller may turn on the plurality of fourth switching elements, turn off the plurality of third switching elements and the second inverter, and control the plurality of first switching elements through pulse width modulation to drive the motor.

For example, when the plurality of fourth switching elements are turned on and the plurality of third switching elements and the second inverter are turned off, the plurality of coils in each of the winding portions may be electrically connected to each other in series and the motor may be driven as a closed end winding motor having a neutral by the other ends of the plurality of fourth switching elements.

The motor driving apparatus described above allows more efficient driving as well as improved power performance by varying inductance in the closed end winding motor driving mode and performing switching to the open end winding motor driving mode based on the required performance of the motor.

The methods and apparatuses of the present disclosure have other features and advantages which will be apparent from or are set forth in more detail in the accompanying drawings, which are incorporated herein, and the following Detailed Description, which together serve to explain predetermined principles of the present disclosure.

### BRIEF DESCRIPTION OF THE DRAWINGS

FIG. 1 is a circuit diagram of a motor driving apparatus according to an exemplary embodiment of the present disclosure.
FIG. 2 is a circuit diagram for describing an operating state of a motor driving apparatus in a CEW single mode according to an exemplary embodiment of the present disclosure.
FIG. 3 is a circuit diagram for describing an operating state of a motor driving apparatus in a CEW serial mode according to an exemplary embodiment of the present disclosure.
FIG. 4 is a circuit diagram for describing an operating state of a motor driving apparatus in an OEW serial mode according to an exemplary embodiment of the present disclosure.
FIG. 5 illustrates rotation speed (RPM)-torque curves by the motor driving modes of a motor driving apparatus according to an exemplary embodiment of the present disclosure.
FIG. 6 is a flowchart illustrating an example of a motor control process according to an exemplary embodiment of the present disclosure.

It may be understood that the appended drawings are not necessarily to scale, presenting a somewhat simplified representation of various features illustrative of the basic principles of the present disclosure. The specific design features of the present disclosure as included herein, including, for example, specific dimensions, orientations, locations, and shapes will be determined in part by the particularly intended application and use environment.

In the figures, reference numbers refer to the same or equivalent parts of the present disclosure throughout the several figures of the drawing.

### DETAILED DESCRIPTION

Reference will now be made in detail to various embodiments of the present disclosure(s), examples of which are illustrated in the accompanying drawings and described below. While the present disclosure(s) will be described in conjunction with exemplary embodiments of the present disclosure, it will be understood that the present description is not intended to limit the present disclosure(s) to those exemplary embodiments of the present disclosure. On the other hand, the present disclosure(s) is/are intended to cover not only the exemplary embodiments of the present disclosure, but also various alternatives, modifications, equivalents and other embodiments, which may be included within the spirit and scope of the present disclosure as defined by the appended claims.

Embodiments included herein will be described in detail with reference to the accompanying diagrams in the following, and the same or similar components are provided the same reference numerals regardless of the figure numbers, and repetitive descriptions thereof will be omitted. The suffixes "module" and "portion" for the components used in the following description are provided or used interchangeably only in consideration of the ease of writing up the specification and do not have distinct meanings or roles in themselves. Furthermore, in describing the exemplary embodiment included in the present specification, when it is determined that specific descriptions of related technology already known may obscure the gist of the embodiments included in the present specification, the detailed descriptions thereof will be omitted. Furthermore, it is to be understood that the accompanying diagrams are only for easier understanding of the embodiments included in the present specification, that the technical ideas included in the present specification are not limited by the accompanying drawings, and that all modifications, equivalents, or substitutes of the embodiments are included in the ideas and technical scope of the present disclosure.

Terms such as first and/or second may be used to describe various components, but the components are not to be limited by the terms. The terms only serve the purpose of distinguishing one component from other components.

When a component is referred to as being "connected" or "coupled" to another component, it may be directly connected or coupled to the another component, but it is to be understood that other components may exist in between. On the other hand, when a component is referred to as being "directly connected" or "directly coupled" to another component, it is to be understood that there are no intervening components present.

Singular expressions include plural expressions unless the context explicitly indicates otherwise.

In the present specification, terms such as "comprise" or "have" are intended to designate the presence of implemented features, numbers, steps, operations, components, parts, or combinations thereof described in the specification and are not to be understood to preclude the presence or additional possibilities of one or more of other features, numbers, steps, operations, components, parts, or combinations thereof in advance.

Furthermore, a unit or control unit included in the names such as a motor control unit MCU, a hybrid control unit HCU, and the like is a term only used in the naming of a controller that controls a specific function of a vehicle only and does not mean a generic function unit. For example, each control unit may include a communication device communicating with other control units or sensors to control the functions for which it is responsible, a memory storing an operating system, logic commands, and input/output information, and one or more processors executing judgment, calculation, and determination, and the like needed for controlling the function for which it is responsible.

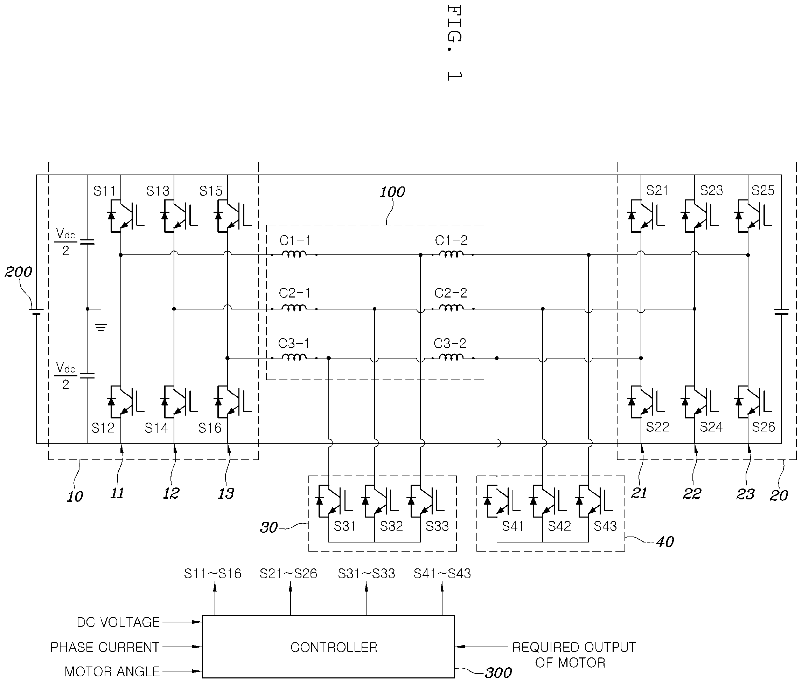

FIG. 1 is a circuit diagram of a motor driving apparatus according to an exemplary embodiment of the present disclosure.

FIG. 1 shows that the motor driving apparatus according to an exemplary embodiment of the present disclosure is a motor driving apparatus that supplies driving power to a motor 100 having a plurality of winding portions respectively corresponding to a plurality of phases and may include a first inverter 10 including a plurality of first switching elements S11, S12, S13, S14, S15 and S16 and electrically connected to a first end of each winding portion of the motor 100, a second inverter 20 including a plurality of second switching elements S21, S22, S23, S24, S25 and S26 and electrically connected to a second end of each winding portion of the motor 100, a first changeover switch portion 30 including a plurality of third switching elements S31, S32 and S33, a second changeover switch portion 40 including a plurality of fourth switching elements S41, S42 and S43, and a controller 300 controlling ON/OFF states of the first switching elements S11, S12, S13, S14, S15 and S16, the second switching elements S21, S22, S23, S24, S25 and S26, the third switching elements S31, S32 and S33, and the fourth switching elements S41, S42 and S43 based on a required output of the motor 100.

The winding portion of the motor 100 may include a first winding portion C1-1, C1-2 corresponding to a first phase, a second winding portion C2-1, C2-2 corresponding to a second phase, and a third winding portion C3-1, C3-2 corresponding to a third phase. Each winding portion may include a plurality of coils electrically connected to each other in series. For example, the first winding portion C1-1, C1-2 may include a 1-1 coil C1-1 and 1-2 coil C1-2 electrically connected to each other in series, the second winding portion C2-1, C2-2 may include a 2-1 coil C2-1 and a 2-2 coil C2-2 electrically connected to each other in series, and the third winding portion C3-1, C3-2 may include a 3-1 coil C3-1 and a 3-2 coil C3-2 electrically connected to each other in series.

Here, that a winding portion includes a plurality of coils does not necessarily mean that the coils are physically separated (for example, a connecting portion in which no turn is formed is provided between the coils so that the coils are spaced apart by the connecting portion). A single coil forming continuous turns may be divided into a first coil and a second coil by a portion branching off at a specific point to one end of a third switching element.

On the other hand, the motor 100 may be divided into a first coil portion C1-1, C2-1, C3-1 and a second coil portion C1-2, C2-2, C3-2 according to the interconnection relationship with the first changeover switch portion 30 and the second changeover switch portion 40.

One end of each of the third switching elements S31, S32 and S33 included in the first changeover switch portion 30 may be electrically connected to a connecting portion between two coils of the winding portion of the corresponding phase, the two coils being connecting to each other in series, and the other ends of the plurality of third switching elements S31, S32 and S33 may be electrically connected to each other. For example, one end of 3-1 switching element S31 may be electrically connected to a connecting portion between the 3-1 coil C3-1 and the 3-2 coil C3-2, one end of a 3-2 switching element S32 may be electrically connected to a connecting portion between the 2-1 coil C2-1 and the 2-2 coil C2-2, and one end of a 3-3 switching element S33 may be electrically connected to a connecting portion between the 1-1 coil C1-1 and the 1-2 coil C1-2 respectively.

Furthermore, one end of each of the fourth switching elements S41, S42 and S43 included in the second changeover switch portion 40 may be electrically connected to the other end of the winding portion of the corresponding phase, and the other ends of the plurality of fourth switching elements S41, S42 and S43 may be electrically connected to each other.

The first inverter 10 and the second inverter 20 may convert the DC power stored in the battery 200 into three-phase AC power and provide the AC power to the motor 100 or may convert into a direct current the regenerative braking energy generated by the regenerative braking torque generation of the motor 100 during regenerative braking and provide the direct current to the battery 200. The conversion between the DC power and AC power may be performed through pulse width modulation control of the plurality of switching elements S11, S12, S13, S14, S15 and S16 and the plurality of second switching elements S21, S22, S23, S24, S25 and S26 respectively provided in the first inverter 10 and the second inverter 20.

The first inverter 10 may include a plurality of legs 11, 12 and 13 to which DC voltage is applied. Each of the legs 11, 12 and 13 may respectively correspond to a plurality of phases of the motor 100 to form an electrical connection.

The first leg 11 may include two switching elements S11, S12 electrically connected to each other in series, and a connecting node between the two switching elements S11, S12 may be electrically connected to one end of the winding portion C1-1, C1-2 of a phase in the motor 100 so that the AC power corresponding to the phase among a plurality of phases may be input and output. Similarly, the second leg 12 may include two switching elements S13, S14 electrically connected to each other in series, and a connecting node between the two switching elements S13, S14 may be electrically connected to one end of the winding portion C2-1, C2-2 of a phase in the motor 100 so that the AC power corresponding to the phase among a plurality of phases may be input and output. Furthermore, the third leg 13 may include two switching elements S15, S16 electrically connected to each other in series, and a connecting node between the two switching elements S15, S16 may be electrically connected to one end of the winding portion C3-1, C3-2 of a phase in the motor 100 so that the AC power corresponding to the phase among a plurality of phases may be input and output.

The second inverter 20 may have a similar configuration as the first inverter 10. The second inverter 20 may include a plurality of legs 21, 22 and 23 to which DC voltage from the battery 200 is applied. Each of the legs 21, 22 and 23 may respectively correspond to a plurality of phases of the motor 30 to form an electrical connection.

The first leg 21 may include two switching elements S21, S22 electrically connected to each other in series, and a connecting node between the two switching elements S21, S22 may be electrically connected to the other end of the winding portion C3-1, C3-2 of a phase in the motor 100 so that AC power corresponding to the phase among a plurality of phases may be input and output. Similarly, the leg 22 may include two switching elements S23, S24 electrically connected to each other in series, and a connecting node between the two switching elements S23, S24 may be electrically connected to the other end of the winding portion C2-1, C2-2 of a phase in the motor 100 so that the AC power corresponding to the phase among a plurality of phases may be input and output. Furthermore, the third leg 23 may include two switching elements S25, S26 electrically connected to each other in series, and a connecting node between the two switching elements S25, S26 may be electrically connected to the other end of the winding portion C1-1, C1-2 of a phase in the motor 100 so that the AC power corresponding to the phase among a plurality of phases may be input and output.

The first inverter 10 is electrically connected to one end of the winding portion of the motor 100 and the second inverter 20 is electrically connected to the other end of the winding portion of the motor 100. That is, an electrical connection may be formed by the open end winding method by which either end of the winding portion of the motor 100 is respectively electrically connected to the first inverter 10 and the second inverter 20.

The controller 300 is an element that switches the switching elements S11, S12, S13, S14, S15 and S16, S21, S22, S23, S24, S25 and S26 included in the first inverter 10 and the second inverter 20 through pulse width modulation control so that the motor 100 may be driven based on the required output required for the motor 100. In particular, in the various embodiments of the present disclosure, the controller 300 may determine the driving mode of the motor, to be described below, based on the required output of the motor 100, accordingly determine the ON/OFF states of the first changeover switch portion 30 and the second changeover switch portion 40, and switch the switch elements of a converter activated according to the determined mode through pulse width modulation control.

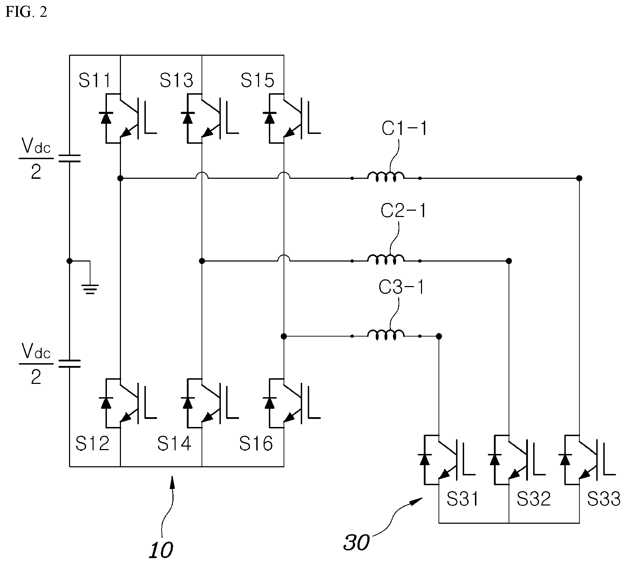

A plurality of motor driving modes different from each other may be implemented in the connecting configurations described above with reference to FIG. 1, in accordance in accordance with whether the second inverter 20, the first changeover switch portion 30, and the second changeover switch portion 40 are turned on or off. Each motor driving mode will be described with reference to FIG. 2, FIG. 3 and FIG. 4.

FIG. 2 is a circuit diagram for describing an operating state of a motor driving apparatus in a CEW single mode according to an exemplary embodiment of the present disclosure.

FIG. 2 shows that, when the controller 300 turns on the plurality of third switching elements S31, S32 and S33 and turns off the plurality of fourth switching elements S41, S42 and S43 and the second inverter 20, the other ends of the first coil portion C1-1, C2-1, C3-1 of the motor 100 form an electrical connection with each other by the plurality of third switching elements S31, S32 and S33 so that the motor 100 has a Y-connected winding configuration having a first neutral point N1. Accordingly, the controller 300 may switch only the first switching elements S11, S12, S13, S14, S15 and S16 of the first inverter 10 through pulse width modulation control to drive the motor 100.

Since the present motor driving method utilizes only one of the first coil portion C1-1, C2-1, c3-1 and the second coil portion C1-2, C2-2, C3-2 of the motor 100 and the motor becomes a closed end winding CEW type motor, the motor driving method may be referred to as a 'CEW single mode'.

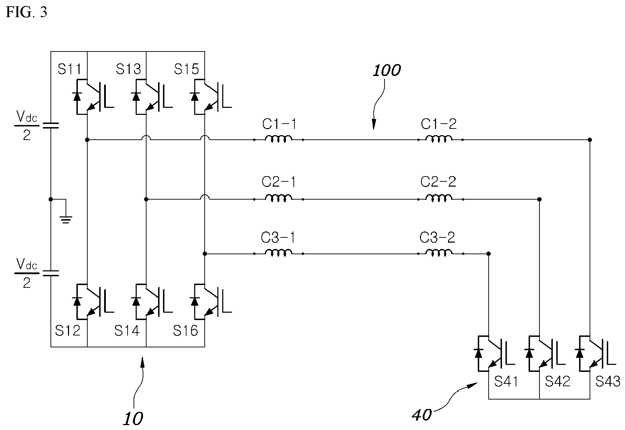

FIG. 3 is a circuit diagram for describing an operating state of a motor driving apparatus in a CEW serial mode according to an exemplary embodiment of the present disclosure.

The controller 300 may turn on the plurality of fourth switching elements S41, S42 and S43 and turn off the plurality of third switching elements S31, S32 and S33 and the second inverter 20. Accordingly, since the third switching elements S31, S32 and S33 are turned off, two coils corresponding to a same phase in the first coil portion C1-1, C2-1, C3-1 and the second coil portion C1-2, C2-2, C3-2 are electrically connected to each other in series as illustrated in FIG. 3. Furthermore, the other ends of the second coil portion CI-2, C2-2, C3-2 form an electrical connection with each other by the plurality of fourth switching elements so that the motor 100 has a Y-connected winding configuration having a second neutral point N2. Accordingly, the controller 300 may switch only the first switching elements S11, S12, S13, S14, S15 and S16 of the first inverter 10 through pulse width modulation control to control the motor 100.

This motor driving method connects the first coil portion C1-1, C2-1, C3-1 and the second coil portion C1-2, C2-2, C3-2 of the motor 100 to each other in series and the motor becomes a closed end winding CEW type motor so that the motor driving method may be referred to as a 'CEW serial mode'.

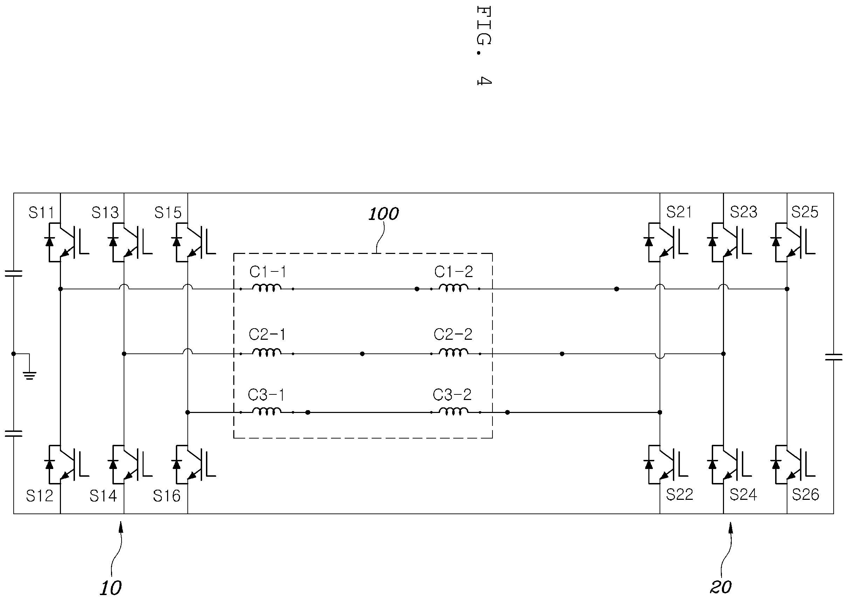

FIG. 4 is a circuit diagram for describing an operating state of a motor driving apparatus in an OEW serial mode according to an exemplary embodiment of the present disclosure.

When both the first changeover switch portion 30 and the second changeover switch portion 40 are turned off, either end of the winding portion of the motor 100 is respectively electrically connected to the first inverter 10 and the second inverter 20. Accordingly, the controller 300 may turn off the first changeover switch portion 30 and the second changeover switch portion 40, activate the first inverter 10 and the second inverter 20, and switch both the first switching elements S11, S12, S13, S14, S15 and S16 and the second switching elements S21, S22, S23, S24, S25 and S26 through pulse width modulation control to drive the motor 100.

This motor driving method connects the first coil portion C1-1, C2-1, C3-1 and the second coil portion C1-2, C2-2, C3-2 of the motor 100 to each other in series and the motor becomes an open end winding OEW type motor so that the motor driving method may be referred to as an 'OEW serial mode'.

The characteristics of the plurality of motor driving modes described thus far will be described in the following.

In the two motor driving modes of the CEW type, the inductance of the first coil portion affects the motor performance in the CEW single mode, while the total inductance of coils electrically connected to each other in series in each of the first coil portion and the second coil portion affects the motor performance in the CEW serial mode.

After all, according to the exemplary embodiment of the present disclosure, the motor driving apparatus may provide a total of three driving modes: two CEW type modes having different inductances and an OEW type driving mode having a single inductance.

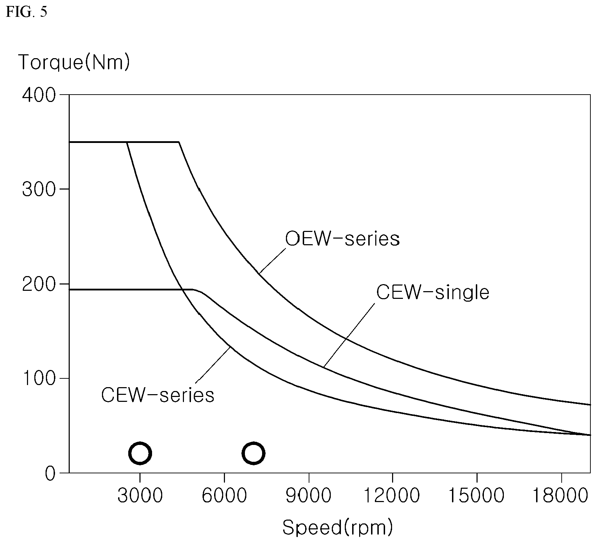

FIG. 5 illustrates rotation speed (RPM)-torque curves by the motor driving modes of a motor driving apparatus according to an exemplary embodiment of the present disclosure.

FIG. 5 shows that the three modes have different RPM-torque characteristics. Therefore, an appropriate choice among the three modes enables optimized performance for driving situations.

For example, small torque but high output may be obtained in the CEW single mode due to lower inductance than in the CEW serial mode. The output is lower than the maximum possible output in the OEW serial mode, but driving only the first inverter 10 allows high-efficiency operation.

Furthermore, large torque may be obtained at a low speed for the same current as the inductance gets relatively large in the CEW serial mode so that rapid acceleration performance at the time of starting a vehicle may be improved. Compared with the OEW serial mode, the CEW serial mode may improve the motor system efficiency by driving the first inverter 10 alone. Driving only the first inverter 10 allows higher system efficiency in the CEW serial mode than in the OEW serial mode.

Furthermore, OEW serial mode may bring about an increase in the vehicle power performance as the maximum output gets greater than the CEW type mode.

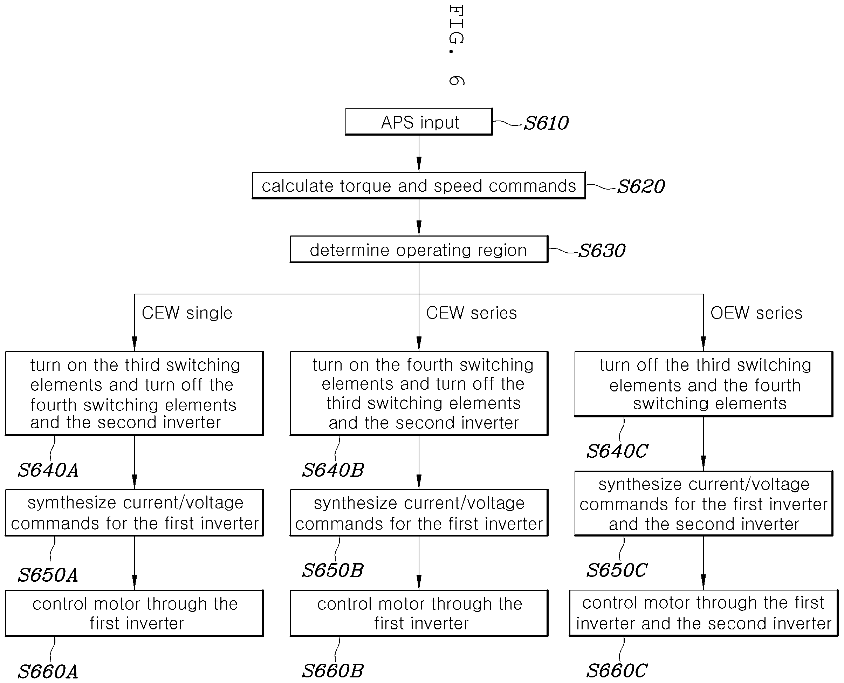

A method of controlling a motor driving apparatus of implementing the plurality of driving modes described above will be described with reference to FIG. 6.

FIG. 6 is a flowchart illustrating an example of a motor control process according to an exemplary embodiment of the present disclosure.

FIG. 6 shows that, according to an exemplary embodiment of the present disclosure, the motor control method may start with receiving by the controller 300 of input of required output (required torque) of the motor 100 from an outside host controller and the like once the motor starts to be driven.

The host controller may receive an input of a value of an accelerator pedal position sensor APS (S610) and determine, based on the input, the required torque or required output of the driver. The host controller may be configured to determine torque or revolutions per minute (rpm) commands for the motor 40 and transmit the commands to the controller 300 in order to meet the torque or output requirement (S620). Here, the host controller may be a vehicle control unit VCU in the case of an electric vehicle EV or a hybrid control unit HCU in the case of a hybrid electric vehicle HEV, depending on the vehicle type. However, the present disclosure is not necessarily limited to the presented examples.

The controller 300 may determine a driving region, that is, the driving mode, of the motor 100 based on the commands transmitted from the host controller (S630).

For example, the controller 300 may determine the driving mode to be the CEW single mode when a high output higher than a preset output reference and low torque equal to or less than a preset torque reference are required.

Furthermore, the controller 300 may determine the driving mode to be the CEW serial mode when a low output equal to or less than an output reference and low torque are required and the speed is equal to or less than a preset speed reference (vehicle speed or motor RPM).

Furthermore, the controller 300 may determine the driving mode to be the OEW serial mode when high output and high torque greater than the preset torque reference are required and the speed is higher than a preset speed reference.

However, the criteria for determining the driving mode described above are presented as examples, and the possibility of various modifications will be self-evident to those skilled in the art. It will be also self-evident to those skilled in the art that the torque reference, output reference, and speed reference are respectively determined through tests or simulations in consideration of performance, characteristics, and the like of power electric PE system.

When the operating mode is determined to be the CEW single mode, the controller 300 may turn on the third switching elements S31, S32, S33 and turn off the fourth switching elements S41, S42, S43 and the second inverter 20 (S640A).

Accordingly, the controller 300 may synthesize the current and voltage commands of the first inverter 10 (S650A) and perform motor control through the first inverter 10 (S660A).

In contrast, when the operating mode is determined to be the CEW serial mode, the controller 300 may turn on the fourth switching elements S41, S42, S4340 and turn off the third switching elements S31, S32, S33 and the second inverter 20 (S640B).

Accordingly, the controller 300 may synthesize the current and voltage commands of the first inverter 10 (S650B) and perform motor control through the first inverter 10 (S660B).

Furthermore, when the operating mode is determined to be the OEW serial mode, the controller 300 may turn off the third switching elements 30 and the fourth switching elements 40 (S640C).

Accordingly, the controller 300 may synthesize the current and voltage commands of the first inverter 10 and the second inverter 20 (S650C) and perform motor control through the first inverter 10 and the second inverter 20 (S660C).

In the exemplary embodiment described above, two changeover switch portions 30, 40 are used in dividing the windings of the motor 100 into the first coil portion C1-1, C2-1, C3-1 and the second coil portion C1-2, C2-2, C3-2. In contrast, according to another exemplary embodiment of the present disclosure, more than two changeover switches may be used to have more than two coil portions so that the CEW mode may be additionally provided.

In other words, a plurality of coils electrically connected to each other in series may be provided in each of winding portions respectively corresponding to each phase of the motor, and changeover switches provided with switching elements, one end of each switching element being electrically connected to a connecting portion between a pair of coils adjacent to but different from each other among a plurality of coils and the other ends of the switching elements being electrically connected to each other may be disposed.

For example, one end of the additional coil may be connected in series to the other end of each one of coils C1-2, C2-2, C3-1 of the second coil portion, one end of the additional switch portion may be electrically connected to the other end of each additional coil, and the other ends of the additional switch portion may be electrically connected to each other. For example, in the case of the winding portion corresponding to the first phase, 1-1 coil and 1-2 coil may form a pair of coils adjacent to each other among a plurality of coils electrically connected to each other in series, and one end of the switching element provided in one changeover switch portion is electrically connected to a connecting portion between the pair of coils; 1-2 coil and an additional coil may form another pair of coils adjacent to each other and one end of a switching element provided in another changeover switch portion may be electrically connected to a connecting portion between the another pair of coils.

In the instant case, a total of three CEW modes are provided: the CEW single mode that utilizes the first coil portion C1-1, C2-1, C3-1, a CEW first serial mode in which the first coil portion and the second coil portion C1-2, C2-2, C3-2 are connected in series, and a CEW second serial mode in which the first coil portion, the second coil portion and an additional coil portion including additional coils are all connected in series. Therefore, an overall total of four driving modes including the OEW serial mode may be provided.

On the other hand, it is self-evident to those skilled in the art that the first to fourth switching elements may be replaced with various types of switching elements such as Si, SiC, thyristors, relays, and the like in the exemplary embodiments described above.

Furthermore, the term related to a control device such as "controller", "control apparatus", "control unit", "control device", "control module", or "server", etc refers to a hardware device including a memory and a processor configured to execute one or more steps interpreted as an algorithm structure. The memory stores algorithm steps, and the processor executes the algorithm steps to perform one or more processes of a method in accordance with various exemplary embodiments of the present disclosure. The control device according to exemplary embodiments of the present disclosure may be implemented through a nonvolatile memory configured to store algorithms for controlling operation of various components of a vehicle or data about software commands for executing the algorithms, and a processor configured to perform operation to be described above using the data stored in the memory. The memory and the processor may be individual chips. Alternatively, the memory and the processor may be integrated in a single chip. The processor may be implemented as one or more processors. The processor may include various logic circuits and operation circuits, may process data according to a program provided from the memory, and may generate a control signal according to the processing result.

The control device may be at least one microprocessor operated by a predetermined program which may include a series of commands for carrying out the method included in the aforementioned various exemplary embodiments of the present disclosure.

The aforementioned invention can also be embodied as computer readable codes on a computer readable recording medium. The computer readable recording medium is any data storage device that can store data which can be thereafter read by a computer system and store and execute program instructions which can be thereafter read by a computer system. Examples of the computer readable recording medium include Hard Disk Drive (HDD), solid state disk (SSD), silicon disk drive (SDD), read-only memory (ROM), random-access memory (RAM), CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by a control device, and the control device may be configured by multiple control devices, or an integrated single control device.

In various exemplary embodiments of the present disclosure, the control device may be implemented in a form of hardware or software, or may be implemented in a combination of hardware and software.

Furthermore, the terms such as "unit", "module", etc. included in the specification mean units for processing at least one function or operation, which may be implemented by hardware, software, or a combination thereof.

The foregoing descriptions of specific exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described in order to explain certain principles of the present disclosure and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

## Claims

1. A motor driving apparatus of driving a motor having a plurality of winding portions respectively corresponding to a plurality of phases, the motor driving apparatus comprising:
a first inverter including a plurality of first switching elements and electrically connected to a first end of each of the winding portions;
a second inverter including a plurality of second switching elements and electrically connected to second ends of a plurality of winding portions;
a first changeover switch portion including a plurality of third switching elements, a first end of each of the third switching elements being electrically connected to a connecting portion between a first coil and a second coil provided in each of the winding portions, the first coil and the second coil being electrically connected to each other in series, and second ends of the plurality of third switching elements being electrically connected to each other;
a second changeover switch portion including a plurality of fourth switching elements, a first end of each of the fourth switching elements being electrically connected to the second end of each of the winding portions and second ends of the plurality of fourth switching elements being electrically connected to each other; and
a controller connected to the first switching elements, the second switching elements, the third switching elements and to the fourth switching elements and configured for controlling ON/OFF states of the first switching elements, the second switching elements, the third switching elements and to the fourth switching elements based on at least one of a required output, a required torque, and a speed of the motor.

2. The motor driving apparatus of claim 1, wherein the controller is configured to turn on the plurality of third switching elements, to turn off the plurality of fourth switching elements and the second inverter, and to control the plurality of first switching element through pulse width modulation to drive the motor when the required torque is equal to or less than a preset torque reference and the required output is greater than a preset power reference.

3. The motor driving apparatus of claim 2, wherein the motor is driven as a closed end winding motor including a neutral by the second ends of the plurality of third switching elements when the plurality of the third switching elements are turned on and the plurality of fourth switching elements and the second inverter are turned off.

4. The motor driving apparatus of claim 1, wherein the controller is configured to turn on the plurality of fourth switching elements, to turn off the plurality of third switching elements and the second inverter, and to control the plurality of first switching elements through pulse width modulation to drive the motor when the required torque is greater than a preset torque reference, the required output is equal to or less than a preset power reference, and the speed is equal to or less than a preset speed reference.

5. The motor driving apparatus of claim 4, wherein the first coil and the second coil in each of the winding portions are electrically connected to each other in series and the motor is driven as a closed end winding motor including a neutral by the second ends of the plurality of fourth switching elements when the plurality of fourth switching elements are turned on and the plurality of third switching elements and the second inverter are turned off.

6. The motor driving apparatus of claim 1, wherein the controller is configured to turn off the plurality of third switching elements and the plurality of fourth switching elements and to control the plurality of first switching elements and the plurality of second switching elements through pulse width modulation to drive the motor as an open end winding motor when the required torque is greater than a preset torque reference, the required output is greater than a preset power reference, and the speed is greater than a preset speed reference.

7. A motor driving apparatus of driving a motor including a plurality of windings respectively corresponding to a plurality of phases, the motor driving apparatus comprising:
a first inverter including a plurality of first switching elements and electrically connected to a first end of each of the winding portions;
a second inverter including a plurality of second switching elements and electrically connected to a second end of each of the winding portions;
a plurality of first changeover switch portions respectively including a plurality of third switching elements, a first end of each of the third switching elements being electrically connected to a connecting portion between a pair of coils adjacent to each other among a plurality of coils provided in each of the winding portions, the plurality of coils being electrically connected to each other in series, and second ends of the plurality of third switching elements being electrically connected to each other;
a second changeover switch portion including a plurality of fourth switching elements, a first end of each of the fourth switching elements being electrically connected to the second end of each of the winding portions and second ends of the plurality of fourth switching elements being electrically connected to each other; and
a controller connected to the first switching elements, the second switching elements, the third switching elements, and the fourth switching elements and configured for controlling ON/OFF states of the first switching elements, the second switching elements, the third switching elements, and the fourth switching elements based on at least one of a required output, a required torque, and a speed of the motor.

8. The motor driving apparatus of claim 7, wherein the controller is configured to turn off the plurality of third switching elements and the plurality of fourth switching elements and to control the plurality of first switching elements and the plurality of second switching elements through pulse width modulation to drive the motor as an open end winding motor.

9. The motor driving apparatus of claim 7, wherein the controller is configured to turn on the plurality of fourth switching elements, to turn off the plurality of third switching elements and the second inverter, and to control the plurality of first switching elements through pulse width modulation to control the motor.

10. The motor driving apparatus of claim 9, wherein the plurality of coils in each of the plurality winding portions are electrically connected to each other in series, and the motor is driven as a closed end winding motor including a neutral by the second ends of the plurality of fourth switching elements when the plurality of fourth switching elements are turned on and the plurality of third switching elements and the second inverter are turned off.

11. A method of controlling the motor driving apparatus of claim 1, the method comprising:
turning on the plurality of third switching elements, turning off the plurality of fourth switching elements and the second inverter, and controlling the plurality of first switching element through pulse width modulation to drive the motor, by the controller, when the required torque is equal to or less than a preset torque reference and the required output is greater than a preset power reference.

12. The method of claim 11, further including:
turning on the plurality of fourth switching elements, turning off the plurality of third switching elements and the second inverter, and controlling the plurality of first switching elements through pulse width modulation to drive the motor, by the controller, when the required torque is greater than the preset torque reference, the required output is equal to or less than the preset power reference, and the speed is equal to or less than a preset speed reference.

13. The method of claim 11, further including:
turning off the plurality of third switching elements and the plurality of fourth switching elements and controlling the plurality of first switching elements and the plurality of second switching elements through pulse width modulation to drive the motor as an open end winding motor, by the controller, when the required torque is greater than the preset torque reference, the required output is greater than the preset power reference, and the speed is greater than a preset speed reference.
